# EUROPÄISCHE PATENTSCHRIFT

(11) **EP 1 293 370 B1**
(45) Veröffentlichungstag und Bekanntmachung des Hinweises auf die Patenterteilung: **04.04.2007**
(21) Anmeldenummer: 02017967.7
(22) Anmeldetag: 10.08.2002
(51) Int. Cl.: B60J 7/043

(54) **Führungsvorrichtung für einen Deckel eines zu öffnenden Fahrzeugdaches**
Guiding device for panel of vehicle open roof
Dispositif de guidage pour panneau de toit ouvrant de véhicule

(30) Priorität: 12.09.2001 DE 10144980
(43) Veröffentlichungstag der Anmeldung: 19.03.2003
(73) Patentinhaber: Webasto Vehicle Systems International GmbH, 82131 Stockdorf (DE)
(72) Erfinder: De Gaillard, Francois, 85390 Mouilleron en pareds (FR); Pollak, Martin, 82178 Puchheim (DE); Ettl, Wolfgang, 82166 Gräfelfing (DE)
(74) Vertreter: Konnerth, Dieter Hans

(56) Entgegenhaltungen:
- US-A- 5 765 907
- PATENT ABSTRACTS OF JAPAN vol. 006, no. 216 (M-168), 29. Oktober 1982 (1982-10-29) & JP 57 121924 A (NISSAN JIDOSHA KK), 29. Juli 1982 (1982-07-29)

## Beschreibung

Die Erfindung betrifft eine Führungsvorrichtung für einen Deckel eines zu öffnenden Fahrzeugdaches zum Ausstellen des Deckels und zum Verschieben des ausgestellten Deckels mittels zumindest zweier gegeneinander verschiebbarer Führungsprofile über eine Dachfläche, die sich hinter einer vom Deckel verschließbaren Dachöffnung anschließt.

Aus der WO 00/51835 ist eine Führungsvorrichtung zum Verfahren eines ausgestellten Deckels über eine sich nach hinten anschließende Dachfläche gemäß Oberbegriff des Anspruchs 1 bekannt geworden. Die Vorrichtung enthält beidseits einer Dachöffnung jeweils drei teleskopierbare Führungsprofile oder Führungsschienen, mittels der der ausgestellte Deckel über die sich nach hinten anschließende Dachfläche in einer durch die linear bewegbaren Führungsschienen festgelegten Ebene nach hinten verschoben werden kann. Der nach hinten verschobene Deckel steht damit deutlich über die Dachfläche nach oben hinaus, insbesondere wenn die Dachfläche nach hinten abfällt.

Aufgabe der Erfindung ist es, eine eingangs genannte Führungsvorrichtung zu schaffen, die eine Anpassung der Stellung des nach hinten oberhalb der Dachfläche verschiebbaren Deckels an die Dachfläche ermöglicht.

Diese Aufgabe wird bei der oben genannten Vorrichtung erfindungsgemäß dadurch gelöst, daß zumindest eines der Führungsprofile der Führungsvorrichtung zumindest abschnittsweise eine zur Dachfläche gerichtete Krümmung aufweist, um den mittels der Führungsprofile nach hinten verlagerbaren Deckel zur Dachfläche hin abzusenken. Auf diese Weise bewegt sich das zumindest eine nach hinten verfahrbare Führungsprofil während seiner gesamten Bewegung oder zumindest während eines Abschnittes seines Bewegungsweges derart nach unten, daß der Deckel ebenfalls zur Dachfläche hin abgesenkt wird. Der über der Dachfläche geringer ausgestellte Deckel verursacht weniger Luftwiderstand und Windgeräusche.

Vorteilhafte Ausgestaltungen der Erfindung sind in den Unteransprüchen angegeben.

Die Führungsprofile oder Führungsschienen können derart gestaltet sein, daß der die Krümmung aufweisende Abschnitt am Hinterende des vorderen Führungsprofils und/oder am Hinterende eines mittleren Führungsprofils und/oder am Vorderende des hinteren Führungsprofils gebildet ist. Bei einem kurzen gekrümmten Abschnitt nähert sich die Absenkbewegung des Deckels einer Schwenkbewegung an.

Eine bevorzugte Gestaltung sieht vor, daß die Führungsvorrichtung einen vorderen dachseitig schwenkbar gelagerten Führungshebel, eine daran verschiebbar gelagerte mittlere Antriebsschiene und ein an der Antriebsschiene verschiebbar gelagertes hinteres Trägerprofil des Deckels aufweist, die mit einer insbesondere übereinstimmenden Krümmungslinie für die Verschiebebewegung des Deckels gebildet sind. Die drei Trägerprofile weisen bei einer kurzen Schließanordnung einen vergleichsweise langen Verschiebeweg auf, der eine insbesondere gleichmäßige Absenkbewegung des Deckels bereitstellt.

Vorzugsweise sind der Führungshebel, die Antriebsschiene und das Trägerprofil des Deckels aneinander teleskopierbar gelagert, insbesondere bei einer sich gegenseitig umgreifenden Anordnung der drei Führungsprofile. Jedoch können die zumindest zwei und auch vier Führungsprofile auch derart insbesondere nebeneinander angeordnet sein, daß ein ungleichmäßiger oder variabler Krümmungsradius gebildet sein kann. Eine gleichmäßige Krümmung hat einen Krümmungsradius von beispielsweise 300 bis 350 cm. Je nach Gestalt des Fahrzeugdaches kann hiervon abgewichen werden.

Nachfolgend werden Ausführungsbeispiele der Führungsvorrichtung unter Bezugnahme auf die Zeichnung näher erläutert. Es zeigt:
- Fig. 1: in einer Seitenansicht in Teildarstellung ein Fahrzeug mit einem mittels einer erfindungsgemäßen Führungsvorrichtung ausgestellten Deckel;
- Fig. 2: in einer Seitenansicht in schematischer Darstellung die Führungsvorrichtung mit dem ausgestellten Deckel; und
- Fig. 3: in einer Seitenansicht in schematischer Darstellung die Führungsvorrichtung mit dem ausgestellten und nach hinten verschobenen Deckel.

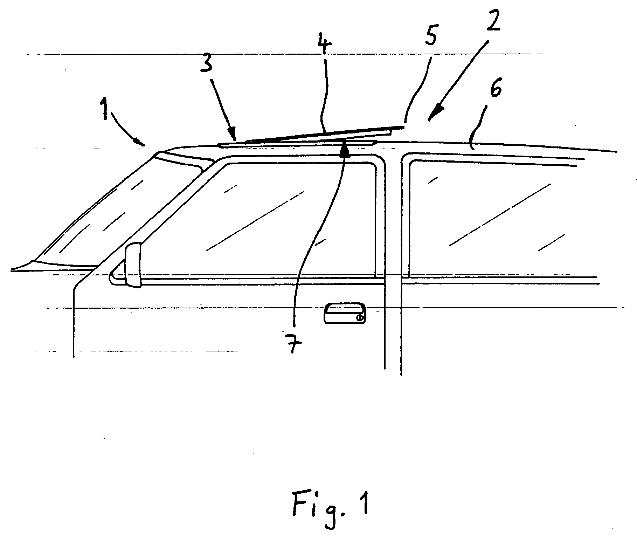

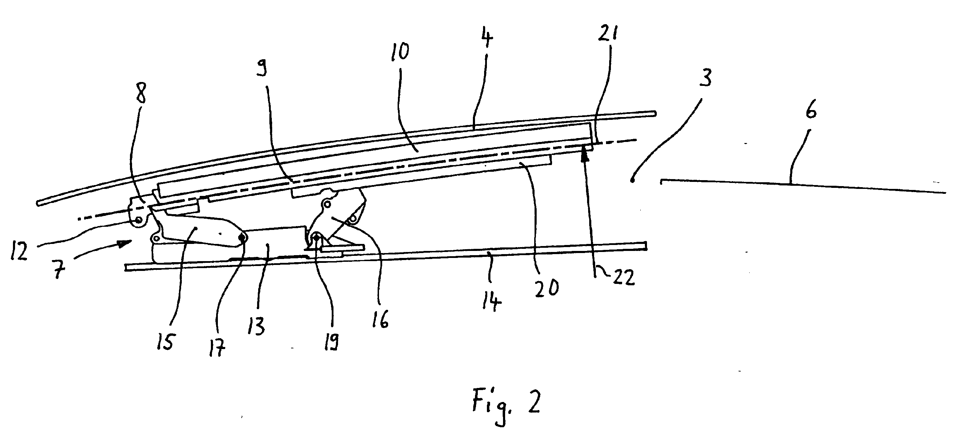

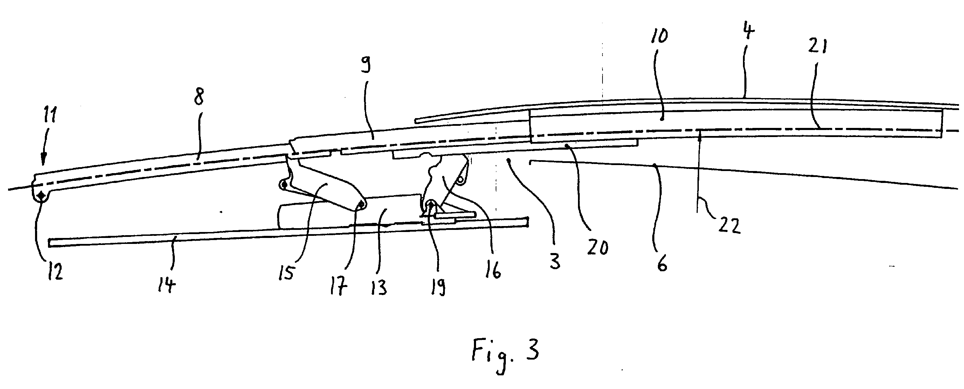

Ein Automobil 1 enthält ein Fahrzeugdach 2 (Fig. 1) mit einer Dachöffnung 3 und einem Deckel 4, mit dem die Dachöffnung 3 zu verschließen ist und der in der Art eines Spoilerdeckels oder eines Deckels eines Hebe-Schiebedaches mit seinem Hinterrand 5 ausstellbar und über die feste Dachfläche 6 nach hinten verschiebbar ist. Der Deckel 4 ist beidseits jeweils mit einer Ausstell- und Führungsvorrichtung 7 gelagert (Fig. 2 und 3), die einen Führungshebel 8, eine Antriebsschiene 9 und ein Trägerprofil 10 in einer gegeneinander verschiebbaren, teleskopierbaren Anordnung aufweist. Der Führungshebel 8 ist an seinem Vorderende 11 am seitlichen Rahmen der Dachöffnung 3 mittels eines Schwenkgelenks um eine dachfeste Querachse 12 schwenkbar gelagert. Die Antriebsschiene 9 weist einen im wesentlichen U-förmigen Querschnitt auf und umgreift den Führungshebel 8 von oben. Das Trägerprofil 10 weist ebenfalls einen im wesentlichen U-förmigen Querschnitt auf und umgreift von oben die Antriebsschiene 9. Der Deckel 4 ist an dem Trägerprofil 10 fest angebracht.

Eine Ausstellmechanik für den Führungshebel 8 enthält einen Schlitten 13, der an einer Führung 14, die an einem seitlich der Dachöffnung 3 angeordneten Rahmen befestigt ist, in Längsrichtung verschiebbar gelagert ist, sowie einen vorderen Ausstellhebel 15 und einen hinteren Ausstellhebel 16. Der vordere Ausstellhebel 15 ist einerseits an dem Schlitten 13 um eine Achse 17 schwenkbar gelagert und andererseits an einer am Führungshebel 8 gebildeten Längsführung 18 verschiebbar gelagert. Der hintere Ausstellhebel 16 ist einerseits am Schlitten 13 um eine Achse 19 schwenkbar gelagert und andererseits an einem Verriegelungsteil oder Schiebeteil 20 schwenkbar gelagert, das wiederum an der Antriebsschiene 9 verschiebbar gelagert ist.

Ein flexibles Zug/Druck-Element (nicht dargestellt) ist einerseits an dem Führungshebel 8 befestigt, an der Antriebsschiene 9 umgelenkt und andererseits an dem Trägerprofil 10 befestigt, so daß beim Verschieben der Antriebsschiene 9 relativ zum Führungshebel 8 das Trägerprofil 10 auf der Antriebsschiene 9 verschoben wird. Zum Ausstellen des Deckels 4 wird der Schlitten 13 über ein Antriebskabel entlang der Führung 14 nach hinten verschoben, wobei der sich gesteuert anhebende hintere Ausstellhebel 16 die Antriebsschiene 9 anhebt und somit gleichzeitig den Führungshebel 8 um die Querachse 12 verschwenkt (Fig. 2). Zum Zurückfahren des ausgestellten Deckels 4 wird der Schlitten 13 weiter nach hinten verschoben, wobei mittels des hinteren Ausstellhebels 16 über das Schiebeteil 20 die Antriebsschiene 9 und über das Zug-/Druckelement auch das Trägerprofil 10 nach hinten verschoben wird. Der vordere Ausstellhebel 8 gleitet gleichzeitig in der Längsführung 18 am Führungshebel 8.

Die voranstehend beschriebene Vorrichtung entspricht in ihrem Aufbau und der Funktionsweise grundsätzlich der in der WO 00/51835 offenbarten Vorrichtung, so daß zusätzlich auf deren Erläuterung verwiesen wird. Im Gegensatz zu der bekannten Vorrichtung sind jedoch erfindungsgemäß der Führungshebel 8, die Antriebsschiene 9 und das Trägerprofil 10 derart in Längsrichtung mit einer Krümmung gebildet, daß sie sich beim teleskopischen Auseinanderfahren und Zusammenschieben auf einer entsprechenden gekrümmten Bewegungsbahn oder Krümmungslinie 21 bewegen, deren Krümmungsradius 22 beispielsweise 300 cm beträgt, wobei der Krümmungsmittelpunkt unterhalb des Fahrzeugdaches liegt. Auf diese Weise wird der Deckel 4, während er in seiner Spoilerstellung nach hinten über die angrenzende Dachfläche 6 verschoben wird, zur Dachfläche 6 hin abgesenkt. Dabei nähert er sich der Dachfläche 6 an oder er entfernt sich zumindest nicht so weit wie bei dem bekannten teleskopischen Ausfahren mit geraden Führungsschienen. Die Krümmung der den Führungshebel 8, die Antriebsschiene 9 und das Trägerprofil 10 enthaltenden Teleskopvorrichtung kann mit einem kleineren Krümmungsradius gebildet sein, so daß auch bei einer nach hinten abwärts gekrümmten Dachfläche 6 der Deckel 4 sich deutlich an die Dachfläche 6 annähert.

### Bezugszeichenliste

- 1: Automobil
- 2: Fahrzeugdach
- 3: Dachöffnung
- 4: Deckel
- 5: Hinterrand
- 6: Dachfläche
- 7: Ausstell- und Führungsvorrichtung
- 8: Führungshebel
- 9: Antriebsschiene
- 10: Trägerprofil
- 11: Vorderende
- 12: Querachse
- 13: Schlitten
- 14: Führung
- 15: vorderer Ausstellhebel
- 16: hinterer Ausstellhebel
- 17: Achse
- 18: Längsführung
- 19: Achse
- 20: Schiebeteil
- 21: Krümmungslinie
- 22: Krümmungsradius

## Patentansprüche

1. Führungsvorrichtung für einen Deckel (4) eines zu öffnenden Fahrzeugdaches zum Ausstellen des Deckels (4) und zum Verschieben des ausgestellten Deckels (4) mittels dreier gegeneinander verschiebbarer Führungsprofile (8, 9, 10) über eine Dachfläche (6), die sich hinter einer vom Deckel (4) verschließbaren Dachöffnung (3) anschließt,
wobei die Führungsvorrichtung als Führungsprofile einen vorderen dachseitig schwenkbar gelagerten Führungshebel (8), eine daran verschiebbar gelagerte mittlere Antriebsschiene (9) und ein an der Antriebsschiene (9) verschiebbar gelagertes hinteres Trägerprofil (10) des Deckels (4) aufweist,
**dadurch gekennzeichnet,**
**daß** zumindest eines der Führungsprofile (8, 9, 10) der Führungsvorrichtung zumindest abschnittsweise eine zur Dachfläche (6) gerichtete Krümmung (21) aufweist, um den mittels der Führungsprofile (8, 9, 10) nach hinten verlagerbaren Deckel (4) zur Dachfläche (6) hin abzusenken.

2. Führungsvorrichtung nach Anspruch 1,
**dadurch gekennzeichnet, daß** der die Krümmung aufweisende Abschnitt am Hinterende des vorderen Führungsprofils (8) und/oder am Hinterende des mittleren Führungsprofils (9) und/oder am Vorderende des hinteren Führungsprofils (10) gebildet ist.

3. Führungsvorrichtung nach Anspruch 1 oder 2,
**dadurch gekennzeichnet, daß** die drei Führungsprofile (8, 9, 10) mit einer insbesondere übereinstimmenden Krümmungslinie (21) für die Verschiebebewegung des Deckels (4) gebildet sind.

4. Führungsvorrichtung nach einem der Ansprüche 1 bis 3,
**dadurch gekennzeichnet, daß** der Führungshebel (8), die Antriebsschiene (9) und das Trägerprofil (10) des Deckels (4) aneinander teleskopierbar gelagert sind.

5. Führungsvorrichtung nach einem der Ansprüche 1 bis 4,
**dadurch gekennzeichnet, daß** der Krümmungsradius (22) der Krümmung (21) eine Länge in einem Bereich von 300 bis 350 cm aufweist.

6. Führungsvorrichtung nach einem der Ansprüche 1 bis 4,
**dadurch gekennzeichnet, daß** der Krümmungsbereich einen variablen Krümmungsradius aufweist.

## Claims

1. Guide device for a panel (4) of a vehicle roof to be opened, for raising the panel (4) and for displacing the raised panel (4), by means of three guide profiles (8, 9, 10) that can be displaced relative to each other, over a roof surface (6) which adjoins the rear of a roof opening (3) that can be closed by the panel (4),
the guide device having as guide profiles a front guide lever (8) pivotably mounted on the roof side, a central drive rail (9) mounted thereon such that it can be displaced, and a rear carrier profile (10) for the panel (4), mounted on the drive rail (9) such that it can be displaced,
**characterized in that**
at least one of the guide profiles (8, 9, 10) of the guide device has, at least in some sections, a curvature (21) oriented towards the roof surface (6), in order to lower the panel (4) that can be displaced rearwards towards the roof surface (6) by means of the guide profiles (8, 9, 10).

2. Guide device according to Claim 1, **characterized in that** the section having the curvature is formed at the rear end of the front guide profile (8) and/or at the rear end of the central guide profile (9) and/or at the front end of the rear guide profile (10).

3. Guide device according to Claim 1 or 2, **characterized in that** the three guide profiles (8, 9, 10) are formed with an in particular coincident line of curvature (21) for the displacement movement of the panel (4).

4. Guide device according to one of Claims 1 to 3, **characterized in that** the guide lever (8), the drive rail (9) and the carrier profile (10) for the panel (4) are mounted on one another such that they can be telescoped.

5. Guide device according to one of Claims 1 to 4, **characterized in that** the radius of curvature (22) of the curvature (21) has a length in a range from 300 to 350 cm.

6. Guide device according to one of Claims 1 to 4, **characterized in that** the curved region has a variable radius of curvature.

## Revendications

1. Dispositif de guidage pour un capot (4) de toit ouvrant de véhicule, en vue de déployer ledit capot (4) et de faire coulisser ledit capot déployé (4), au moyen de trois profilés de guidage (8, 9, 10) pouvant coulisser mutuellement, au-dessus d'une surface de pavillon (6) se rattachant directement à l'arrière d'une ouverture (3) du toit pouvant être obturée par ledit capot (4),
le dispositif de guidage comportant, en tant que profilés de guidage, un levier antérieur de guidage (8) pouvant pivoter côté toit, une glissière centrale d'entraînement (9) montée à coulissement sur ledit levier, et un profilé postérieur (10) de support du capot (4), monté à coulissement sur ladite glissière d'entraînement (9),
**caractérisé par le fait**
**qu'**au moins l'un des profilés de guidage (8, 9, 10) du dispositif de guidage présente, au moins par zones, une courbure (21) dirigée vers la surface de pavillon (6), de manière à provoquer une descente, vers ladite surface de pavillon (6), du capot (4) pouvant être déplacé vers l'arrière au moyen desdits profilés de guidage (8, 9, 10).

2. Dispositif de guidage selon la revendication 1,
**caractérisé par le fait que** la zone munie de la courbure est formée à l'extrémité postérieure du profilé antérieur de guidage (8) et/ou à l'extrémité postérieure du profilé central de guidage (9) et/ou à l'extrémité antérieure du profilé postérieur de guidage (10).

3. Dispositif de guidage selon la revendication 1 ou 2,
**caractérisé par le fait que** les trois profilés de guidage (8, 9, 10) offrent une ligne de courbure (21) notamment coïncidente, en vue du mouvement coulissant du capot (4).

4. Dispositif de guidage selon l'une des revendications 1 à 3,
**caractérisé par le fait que** le levier de guidage (8), la glissière d'entraînement (9) et le profilé (10) de support du capot (4) sont montés à mouvement télescopique les uns sur les autres.

5. Dispositif de guidage selon l'une des revendications 1 à 4,
**caractérisé par le fait que** le rayon de courbure (22) de la courbure (21) possède une longueur située dans une plage de 300 à 350 cm.

6. Dispositif de guidage selon l'une des revendications 1 à 4,
**caractérisé par le fait que** la zone de courbure possède un rayon de courbure variable.
